# EUROPEAN PATENT APPLICATION

(11) **EP 4 729 319 A1**
(43) Date of publication of application: **22.04.2026**
(21) Application number: 24906017.9
(22) Date of filing: 27.11.2024
(51) Int. Cl.: B60H 1/00, B60T 1/00

(54) **VEHICLE**

(30) Priority: 18.12.2023 CN 202311751158
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: DUAN, Yanyan, Ningbo, Zhejiang 315899 (CN); LIU, Yang, Ningbo, Zhejiang 315899 (CN); YAN, Wude, Ningbo, Zhejiang 315899 (CN); DONG, Taotao, Ningbo, Zhejiang 315899 (CN); ZHANG, Junzhe, Ningbo, Zhejiang 315899 (CN); ZHOU, Jinbo, Ningbo, Zhejiang 315899 (CN); MAO, Yun, Ningbo, Zhejiang 315899 (CN); PAN, Fuli, Ningbo, Zhejiang 315899 (CN); ZHANG, Yao, Ningbo, Zhejiang 315899 (CN); YU, Tenglong, Ningbo, Zhejiang 315899 (CN); LIU, Qun, Ningbo, Zhejiang 315899 (CN); SUN, Weiliang, Ningbo, Zhejiang 315899 (CN)
(74) Representative: Michalski Hüttermann & Partner Patentanwälte mbB
(86) International application number: PCT/CN2024/134818
(87) International publication number: WO 2025/130532

(57) **Abstract**

A vehicle (100) includes a vehicle body (1), a thermal management assembly (2), and a brake (3). The vehicle body (1) includes a front compartment (11) and an occupant compartment (14) sequentially arranged along a length direction of the vehicle (100). The thermal management assembly (2) is disposed in the front compartment (11) and includes a plurality of thermal management components (21). The plurality of thermal management components (21) are integrated into an integrated module (22) of the thermal management assembly (2). The brake (3) is disposed in the front compartment (11) and is configured to provide a braking force. On a plane perpendicular to the length direction, an orthographic projection of the integrated module (22) is non-overlapping with an orthographic projection of the brake (3). When the vehicle experiences a collision, even if the integrated module moves towards the brake in the length direction, the integrated module may not collide with the brake, thereby improving the driving safety of the vehicle.

## Description

### CROSS-REFERENCE TO RELATED APPLICATIONS

The present disclosure claims priority to Chinese Patent Application No. 202311751158.8, entitled "VEHICLE," and filed on December 18, 2023, which is incorporated herein by reference in its entirety.

### TECHNICAL FIELD

The present disclosure relates to the field of vehicle technologies.

### BACKGROUND

With the development of new energy technologies, thermal management systems are required to provide more and more functions. Consequently, the volume of the thermal management system becomes increasingly large. In order to address this issue, a growing number of thermal management systems are tending towards integration.

### SUMMARY

The present disclosure provides a vehicle, including:
a vehicle body including a front compartment and an occupant compartment sequentially arranged along a length direction of the vehicle;
a thermal management assembly, disposed in the front compartment and including a plurality of thermal management components, where the plurality of thermal management components are integrated into an integrated module of the thermal management assembly; and
a brake disposed in the front compartment and configured to provide a braking force;
where on a plane perpendicular to the length direction, an orthographic projection of the integrated module is non-overlapping with an orthographic projection of the brake.

In some embodiments, a steering wheel is disposed in the occupant compartment; the vehicle body includes a first side and a second side that are spaced apart from each other along a width direction of the vehicle; the width direction is perpendicular to the length direction; and the integrated module is disposed close to the first side, where
in a case that the steering wheel is disposed close to the first side, the brake is disposed close to the first side, and the integrated module is disposed between the brake and the first side; or
in a case that the steering wheel is disposed close to the second side, the brake is disposed close to the second side.

In some embodiments, a distance between the integrated module and the first side in the width direction is greater than or equal to 430 mm and less than or equal to 485 mm.

In some embodiments, the front compartment includes a rear wall disposed close to the occupant compartment; and in the length direction, a distance between the integrated module and the rear wall is greater than or equal to 320 mm and less than or equal to 350 mm.

In some embodiments, the thermal management assembly includes a cooling module connected to the integrated module; the front compartment includes a front wall disposed away from the occupant compartment; the cooling module is disposed between the integrated module and the front wall; and in the length direction, a distance between the integrated module and the cooling module is greater than or equal to 70 mm and less than or equal to 90 mm.

In some embodiments, the vehicle body includes a cover; the cover is configured to close or expose the front compartment; in a height direction of the vehicle, a distance between the integrated module and the cover is greater than or equal to 80 mm and less than or equal to 100 mm; and the height direction is perpendicular to the length direction.

In some embodiments, the integrated module includes a fixing plate; and the thermal management components are connected to the fixing plate.

In some embodiments, the fixing plate includes a mounting surface; the plurality of thermal management components are individually connected to the mounting surface; the mounting surface is perpendicular to a width direction of the vehicle; and the width direction is perpendicular to the length direction.

In some embodiments, a material of the fixing plate includes at least one of polypropylene, polyethylene, polycarbonate, polyvinyl chloride, polymethyl methacrylate, or polyoxymethylene.

In some embodiments, the plurality of thermal management components include at least two of a motor water pump, an air conditioner water pump, a battery water pump, a heat exchanger, or a three-way valve.

It can be seen from the above embodiments that, in the vehicle of the present disclosure, by staggering the orthographic projections of the integrated module and the brake, even if the integrated module moves toward the brake along the length direction when the vehicle experiences the collision, the integrated module may not collide with the brake. This arrangement helps improve the driving safety of the vehicle. Meanwhile, since the thermal management assembly integrates a plurality of thermal management components into an integrated module, the thermal management components originally scattered in the front compartment can be concentrated together, thereby releasing the space of the front compartment to a certain extent, facilitating the arrangement of other functional components to enrich the functionality of the vehicle, or facilitating the arrangement of storage boxes to expand the storage space of the vehicle.

It is to be understood that both the foregoing general description and the following detailed description are illustrative and explanatory only, and are not restrictive of the present disclosure.

### BRIEF DESCRIPTION OF DRAWINGS

To describe the technical solutions in the embodiments of the present disclosure more clearly, the drawings required in the description of the embodiments will be briefly described below. The drawings in the following description are only some embodiments of the present disclosure. For those skilled in the art, other drawings can be obtained based on these drawings without any creative effort.
FIG. 1 is a simplified schematic diagram of an embodiment of the present disclosure.
FIG. 2 is a simplified schematic diagram of another embodiment of the present disclosure.
FIG. 3 is a simplified cross-sectional view of still another embodiment of the present disclosure.
FIG. 4 is a simplified schematic diagram of an integrated module of a vehicle according to an embodiment of the present disclosure.

### Description of reference signs:

100 vehicle; 1 vehicle body; 11 front compartment; 111 rear wall; 112 front wall; 12 first side; 13 second side; 14 occupant compartment; 15 cover; 2 thermal management assembly; 21 thermal management component; 22 integrated module; 221 fixing plate; 222 mounting surface; 23 cooling module; 3 brake; 4 steering wheel; D1 distance; D2 distance; D3 distance; D4 distance; X length direction; Y width direction; Z height direction.

### DETAILED DESCRIPTION

Illustrative embodiments, examples of which are illustrated in the accompanying drawings, will be described in detail herein. When the following description refers to the drawings, like numerals in different drawings indicate the same or similar elements, unless otherwise indicated. The embodiments described in the following illustrative embodiments do not represent all embodiments consistent with the present disclosure. Rather, they are merely examples of devices consistent with some aspects of the present disclosure as detailed in the appended claims.

The term used in the present disclosure is for the purpose of describing particular embodiments only and is not intended to be limiting of the present disclosure. Technical terms or scientific terms used in the present disclosure should have general meanings as understood by one of ordinary skill in the art to which the present disclosure belongs, unless otherwise defined. Terms, such as "first", "second", or the like, used in the specification and claims of the present disclosure do not indicate any order, quantity, or importance, but are merely used to distinguish between different components. Similarly, terms, such as "one", "a/an", or the like, do not indicate a quantity limitation, but indicate that there is at least one, unless otherwise defined. The terms "a plurality of/multiple" and "several" refer to two or more. Unless otherwise indicated, terms, such as "front", "rear", "lower", "upper", and/or the like, are merely for ease of description, and are not limited to one position or one spatial orientation. Terms, such as "include", "comprise", or the like, mean that the elements or objects before "include" or "comprise" cover the elements or objects and equivalents thereof listed after "include" or "comprise", without excluding other elements or objects. Terms, such as "connect", "connect with each other", or the like, are not limited to physical or mechanical connections, and may include electrical connections, whether direct or indirect. As used in this specification and the appended claims, the singular forms, such as "a/an", "said" and "the", are also intended to include the plural forms, unless clearly indicated otherwise in the context. It should also be understood that the term "and/or" as used herein refers to and includes any or all possible combinations of one or more of the associated listed items.

An integrated thermal management system has an increased volume. Consequently, when the vehicle is involved in a collision, the movement of the large thermal management system toward the cockpit may pose a threat to the personal safety of passengers. It can be seen that the integrated thermal management system imposes a higher requirement on a safety performance of the entire vehicle.

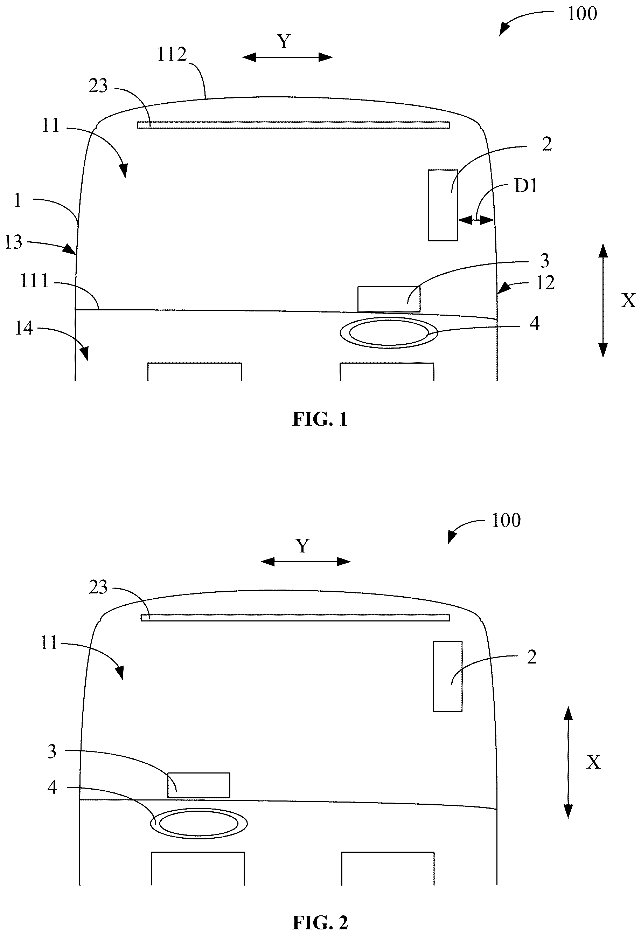

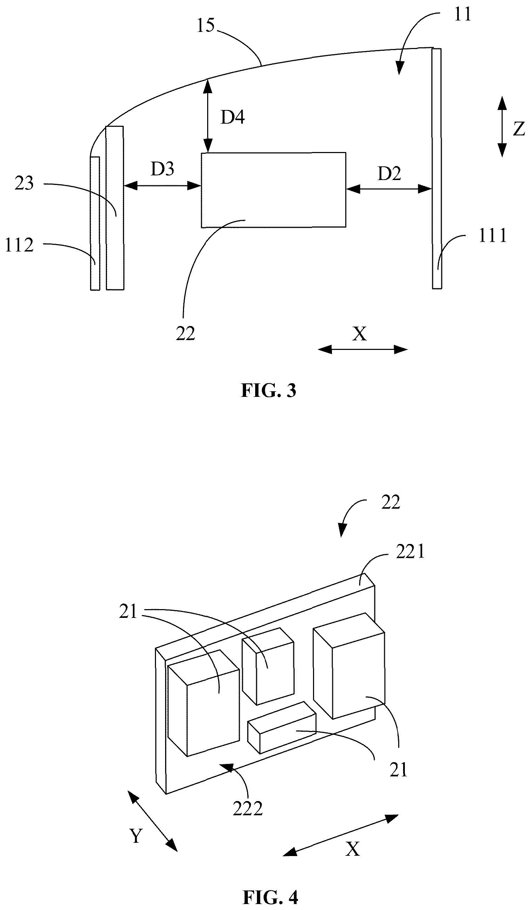

Referring to FIG. 1 to FIG. 2, the present disclosure provides a vehicle 100. The vehicle 100 includes a vehicle body 1, a thermal management assembly 2, and a brake 3. The vehicle body 1 includes a front compartment 11 and an occupant compartment 14 that are sequentially distributed in a length direction X of the vehicle 100. The thermal management assembly 2 and the brake 3 are both disposed in the front compartment 11. The brake 3 is configured to provide a braking force to control deceleration and braking of the vehicle 100. As shown in FIG. 4, the thermal management assembly 2 is disposed in the front compartment 11 and includes a plurality of thermal management components 21. The plurality of thermal management components 21 are integrated into an integrated module 22 of the thermal management assembly 2.

On a plane perpendicular to the length direction X of the vehicle 100, an orthographic projection of the integrated module 22 of the present disclosure does not overlap with an orthographic projection of the brake 3.

Since the integrated module 22 incorporates a plurality of thermal management components 21, the volume of the integrated module 22 is increased compared to a single thermal management component 21. If the orthographic projection of the integrated module 22 partially or completely overlaps with the orthographic projection of the brake 3, when the vehicle 100 encounters a collision, the integrated module 22 collides with the brake 3 along the length direction X, which is prone to cause damage to the brake 3, thereby causing a brake failure and threatening the safety of the driver and passengers in the vehicle 100.

When the vehicle 100 is subjected to a severe impact along the length direction X, if the orthographic projection of the integrated module 22 overlaps with the orthographic projection of the brake 3, the integrated module 22 may drive the brake 3 to move together along the length direction X toward the occupant compartment 14, thereby intruding into the occupant compartment 14 and endangering the safety of the occupant in the occupant compartment 14.

Therefore, in the vehicle 100 of the present disclosure, by staggering the orthographic projections of the integrated module 22 and the brake 3, even if the integrated module 22 moves toward the brake 3 along the length direction X when the vehicle 100 experiences the collision, the integrated module 22 may not collide with the brake 3. This arrangement helps improve the driving safety of the vehicle 100. Meanwhile, since the thermal management assembly 2 integrates the plurality of thermal management components 21 into the integrated module 22, the thermal management components 21 originally scattered in the front compartment 11 can be concentrated together, thereby releasing the space of the front compartment 11 to a certain extent, facilitating the arrangement of other functional components in the front compartment 11 to enrich the functionality of the vehicle 100, for example, arranging a storage box to expand the storage space of the vehicle 100.

A steering wheel 4 is disposed in the occupant compartment 14 of the vehicle 100. The vehicle body 1 includes a first side 12 and a second side 13 spaced apart from each other in the width direction Y. In some embodiments, the integrated module 22 is disposed close to the first side 12. In addition, as shown in FIG. 1, when the steering wheel 4 is disposed close to the first side 12, the brake 3 is disposed close to the first side 12, and the integrated module 22 is disposed between the brake 3 and the first side 12. As shown in FIG. 2, when the steering wheel 4 is disposed close to the second side 13, the brake 3 is disposed close to the second side 13.

The embodiment shown in FIG. 1 is actually a right-hand drive vehicle, that is, a vehicle 100 with a driver's seat on the right side. The embodiment shown in FIG. 2 is actually a left-hand drive vehicle, that is, a vehicle 100 with a driver's seat on the left side. The integrated module 22 of the present disclosure is disposed close to the first side 12 in both the left-hand drive vehicle and the right-hand drive vehicle. In other words, in the vehicle 100 of the present disclosure, no matter whether the vehicle is a left-hand drive vehicle or a right-hand drive vehicle, the position of the integrated module 22 remains unchanged. With this arrangement, when producing the vehicle 100, the manufacturer only needs to adaptively modify the systems such as the steering wheel 4 and the brake 3 for the vehicle models produced for different countries, without changing the position of the integrated module 22, which can improve the production and assembly efficiency of the vehicle 100. In addition, arranging the steering wheel 4 and the brake 3 on a same side can facilitate the connection between the brake 3 and a brake pedal (not shown), simplify a connection structure of vehicle parts, and improve transmission efficiency of braking.

In addition, the integrated module 22 is disposed close to the first side 12, and can be as far away from the center of the front compartment 11 as possible, thereby releasing the space in the center of the front compartment 11. In this way, the vehicle 100 can be equipped with a storage box with a larger storage capacity in the front compartment 11, or more functional components can be added in the front compartment 11 to enrich the functions of the vehicle 100, or a battery with a larger capacity can be provided to improve the endurance of the vehicle 100.

Further, a distance D1 between the integrated module 22 and the first side 12 in the width direction Y is greater than or equal to 430 mm and less than or equal to 485 mm. For example, the distance D1 may be 430 mm, 435 mm, 440 mm, 445 mm, 450 mm, 460 mm, 465 mm, 470 mm, 475 mm, 480 mm, or 485 mm. If the distance between the integrated module 22 and the first side 12 increases, the integrated module 22 will be closer to the center of the front compartment 11, resulting in a decrease in the space in the middle of the front compartment 11. Since the integrated module 22 needs to be fixed by a certain connection structure, excessive proximity of the integrated module 22 to the first side 12 may result in instability of the connection structure or a reduction in safety of force transmission. Thus, the distance D1 within this range allows the integrated module 22 to be arranged as close to the first side 12 as possible to free up space of the front compartment 11 while ensuring connection safety of the integrated module 22.

The front compartment 11 includes a rear wall 111 disposed close to the occupant compartment 14. In order to improve the safety performance of the vehicle 100, as shown in FIG. 3, in the length direction X, a distance D2 between the integrated module 22 and the rear wall 111 is greater than or equal to 320 mm and less than or equal to 350 mm. The distance D2 may be 320 mm, 325 mm, 330 mm, 335 mm, 340 mm, 345 mm, or 350 mm. A sufficient safety crumple space is reserved between the integrated module 22 and the rear wall 111 to ensure that the integrated module 22 does not intrude into the occupant compartment 14 to endanger the occupant when the vehicle 100 experiences a high-speed collision. If the distance D2 is too large, the size of the front compartment 11 in the length direction X will be increased, thereby increasing the size of the vehicle 100 in the length direction X. Therefore, the distance D2 within this range can balance the safety performance of the integrated module 22 while controlling the size of the vehicle 100.

The front compartment 11 includes a front wall 112 disposed away from the occupant compartment 14. As shown in FIG. 3, the thermal management assembly 2 includes a cooling module 23 connected to an integrated module 22. The term "connection" herein refers to a connection through a structure such as a pipeline, rather than a direct physical contact. In this embodiment, the cooling module 23 is disposed between the integrated module 22 and the front wall 112. In the length direction X, a distance D3 between the integrated module 22 and the cooling module 23 is greater than or equal to 70 mm and less than or equal to 90 mm. The distance D3 may be 70 mm, 75 mm, 80 mm, 85 mm, or 90 mm.

When the vehicle 100 is impacted in the length direction X, the relative distance between the cooling module 23 and the integrated module 22 decreases. If the distance D3 is too small, the cooling module 23 and the integrated module 22 are prone to collision and damage. If the distance D3 is too large, the size of the vehicle 100 in the length direction X will be increased without further improving the safety performance. Therefore, the range of the distance D3 of the present disclosure can improve the collision safety performance of the vehicle 100, reduce the cost of subsequent maintenance, and can also control the size of the vehicle 100 in the length direction X to prevent the vehicle 100 from being too large.

With reference to the distance D2 between the integrated module 22 and the rear wall 111 and the distance D3 between the integrated module 22 and the cooling module 23, it can be seen that in this embodiment, the integrated module 22 is disposed closer to the upper right corner (from the perspective of FIG. 2) of the front compartment 11. In this way, the integrated module 22 can release the space of the front compartment 11 as much as possible, so that, for example, the storage box can occupy more space in the width direction Y, or components such as the water tank of the vehicle 100 can occupy more space in both the length direction X and the width direction Y.

As shown in FIG. 3, the vehicle body 1 includes a cover 15. The cover 15 is configured to close or expose the front compartment 11. In a height direction Z, a distance D4 between the integrated module 22 and the cover 15 is greater than or equal to 80 mm and less than or equal to 100 mm. For example, the distance D4 may be 80 mm, 85 mm, 90 mm, 95 mm, or 100 mm.

When the vehicle 100 collides with a pedestrian, the pedestrian comes into contact with the cover 15. The weight of the pedestrian and the impact force will cause the cover 15 to be recessed toward the front compartment 11. If the distance D4 between the integrated module 22 and the cover 15 is too small, the pedestrian will easily collide with the integrated module 22, thereby causing physical injury. If the distance D4 is too large, the integrated module 22 compresses the arrangement space of other components in the front compartment 11 in the height direction Z, such as arrangement space for the water pipes of the thermal management assembly 2. Therefore, the range of the distance D4 between the cover 15 and the integrated module 22 of the present disclosure can prevent the pedestrian from being impacted by the integrated module 22 when the vehicle 100 collides with the pedestrian, and can also enable the integrated module 22 to be disposed at a reasonable position to reserve an arrangement space for other components in the front compartment 11.

It should be noted that since the structure of the vehicle 100 is usually uneven or curved, the distance referred to in the present disclosure should be the minimum distance between the integrated module 22 and the corresponding component. For example, as shown in FIG. 3, the cover 15 is configured as a curved structure. In this case, the distance D4 between the cover 15 and the integrated module 22 is defined as the distance between the integrated module 22 and the cover 15 at the position where the integrate module 22 is close to the front wall 112 in the length direction X, as shown in FIG. 3.

In addition, in various embodiments herein, the length direction X, the width direction Y, and the height direction Z are mutually perpendicular.

The integrated module 22 may be a generalized integration, that is, the thermal management components 21 are concentrated in one place, and a concentrated area is referred to as the integrated module 22. Alternatively, as shown in FIG. 4, in some embodiments, the integrated module 22 includes a fixing plate 221. The thermal management components 21 are connected to the fixing plate 221. With this arrangement, when assembling the vehicle 100, the assembler may first connect the thermal management components 21 to the fixing plate 221, and then connect the integrated module 22 as an integral assembly to the vehicle body 1. In this way, assembly difficulty of the vehicle 100 is reduced, and disassembly and assembly efficiency is higher when the integrated module 22 is subsequently disassembled and assembled.

In an alternative embodiment, the fixing plate 221 includes a mounting surface 222. The plurality of thermal management components 21 are connected to the mounting surface 222 individually. In this embodiment, the thermal management components 21 are mounted on only one side of the fixing plate 221. Then, the other side of the fixing plate 221 opposite to the mounting surface 222 can be used for connection to the vehicle body 1, which helps reduce the difficulty of assembly and connection of the integrated module 22. In addition, the plurality of thermal management components 21 are connected to the mounting surface 222 individually. In other words, the plurality of thermal management components 21 are not stacked, but are "tiled" on the mounting surface 222. In this embodiment, the size of the integrated module 22 in its thickness direction can be minimized.

When assembled in the vehicle 100, the mounting surface 222 is perpendicular to the width direction Y of the vehicle 100. This arrangement can reduce the orthographic projection area of the integrated module 22 on the plane perpendicular to the length direction X as much as possible, so that the installation position of the brake 3 in the width direction Y is more flexible. Moreover, the distance between the orthographic projection of the brake 3 and the orthographic projection of the integrated module 22 can also be increased as much as possible. In this way, when the vehicle 100 is impacted in the length direction X, even if the integrated module 22 moves toward the occupant compartment 14, it may not collide with the brake 3 to cause brake failure, let alone drive the brake 3 to intrude into the occupant compartment 14 together, which helps improve the driving safety of the vehicle 100 and the protection performance for the occupants during the collision.

Further, in an embodiment, a material of the fixing plate 221 includes at least one of polypropylene (PP), polyethylene (PE), polycarbonate (PC), polyvinyl chloride (PVC), polymethyl methacrylate (PMMA), or polyoxymethylene (POM). These materials have high strength and can provide stable support for the plurality of thermal management components 21. Meanwhile, when the vehicle 100 experiences the collision, the fixing plate 221 made of these materials is prone to fracture. Therefore, when the vehicle 100 is subjected to a severe impact, the fracture of the fixing plate 221 causes the large-volume integrated module 22 to disintegrate, so that the plurality of thermal management components 21 are disintegrated into a plurality of scrap components. This arrangement can prevent the large-volume integrated module 22 from intruding into the occupant compartment 14 as a whole and impacting the occupant to cause injury to the occupant.

In addition, since the mounting surface 222 is perpendicular to the width direction Y of the vehicle 100, side surfaces of the fixing plate 221 face the length direction X. When the vehicle 100 is impacted by a force in the length direction X, the small-sized side surfaces of the fixing plate 221 have insufficient load-bearing capacity, making the fixing plate 221 more prone to fracture to disperse the integrated module 22. Therefore, this embodiment can not only reduce the orthographic projection area of the integrated module 22 as much as possible, but also facilitate the disintegration of the integrated module 22, improving the safety performance.

In the foregoing embodiments, the plurality of thermal management components 21 include at least two of a motor water pump, an air conditioner water pump, a battery water pump, a heat exchanger, or a three-way valve. The motor water pump and the battery water pump are configured to pump cooling water in the motor cooling pipeline and the battery cooling pipeline, respectively. The air conditioner water pump is configured to pump the refrigerant in the refrigerant pipeline. The heat exchanger is configured to realize heat exchange between two pipelines. The three-way valve is configured to enable fluid communication among the three pipelines.

It should be noted that the integrated module 22 may include only two thermal management components 21, and in this embodiment, the integrated module 22 is configured to provide two types of thermal management functions. In some other embodiments, there may be three, four, or even more thermal management components 21, enabling the integrated module 22 to provide more thermal management functions.

The various embodiments of the present disclosure may be combined with each other and supplemented to each other without contradiction.

The specific embodiments described herein are merely illustrative examples of the spirit of the present disclosure. Those skilled in the art to which the present disclosure pertains may make various modifications, supplements, or substitutions to the described specific embodiments using similar methods, without departing from the spirit of the present disclosure or going beyond the scope defined by the appended claims.

The technical features of the above embodiments may be combined arbitrarily, and in order to make the description concise, not all possible combinations of the technical features in the above embodiments are described. However, as long as there is no contradiction in these combinations of technical features, they should be considered as falling within the scope of the present specification.

## Claims

1. A vehicle, comprising:
a vehicle body comprising a front compartment and an occupant compartment sequentially arranged along a length direction of the vehicle;
a thermal management assembly, disposed in the front compartment and comprising a plurality of thermal management components, wherein the plurality of thermal management components are integrated into an integrated module of the thermal management assembly; and
a brake disposed in the front compartment and configured to provide a braking force;
wherein on a plane perpendicular to the length direction, an orthographic projection of the integrated module is non-overlapping with an orthographic projection of the brake.

2. The vehicle according to claim 1, wherein a steering wheel is disposed in the occupant compartment; the vehicle body comprises a first side and a second side spaced apart from each other along a width direction of the vehicle; the width direction is perpendicular to the length direction; and the integrated module is disposed close to the first side; wherein
in a case that the steering wheel is disposed close to the first side, the brake is disposed close to the first side, and the integrated module is disposed between the brake and the first side; or
in a case that the steering wheel is disposed close to the second side, the brake is disposed close to the second side.

3. The vehicle according to claim 2, wherein a distance between the integrated module and the first side in the width direction is greater than or equal to 430 mm and less than or equal to 485 mm.

4. The vehicle according to claim 1, wherein the front compartment comprises a rear wall disposed close to the occupant compartment; and in the length direction, a distance between the integrated module and the rear wall is greater than or equal to 320 mm and less than or equal to 350 mm.

5. The vehicle according to claim 1, wherein the thermal management assembly comprises a cooling module connected to the integrated module; the front compartment comprises a front wall disposed away from the occupant compartment; the cooling module is disposed between the integrated module and the front wall; and in the length direction, a distance between the integrated module and the cooling module is greater than or equal to 70 mm and less than or equal to 90 mm.

6. The vehicle according to claim 1, wherein the vehicle body comprises a cover; the cover is configured to close or expose the front compartment; in a height direction of the vehicle, a distance between the integrated module and the cover is greater than or equal to 80 mm and less than or equal to 100 mm; and the height direction is perpendicular to the length direction.

7. The vehicle according to any one of claims 1 to 6, wherein the integrated module comprises a fixing plate; and the plurality of thermal management components are connected to the fixing plate.

8. The vehicle according to claim 7, wherein the fixing plate comprises a mounting surface; the plurality of thermal management components are individually connected to the mounting surface; the mounting surface is perpendicular to a width direction of the vehicle; and the width direction is perpendicular to the length direction.

9. The vehicle according to claim 7, wherein a material of the fixing plate comprises at least one of polypropylene, polyethylene, polycarbonate, polyvinyl chloride, polymethyl methacrylate, or polyoxymethylene.

10. The vehicle according to claim 1, wherein the plurality of thermal management components comprises at least two of a motor water pump, an air conditioner water pump, a battery water pump, a heat exchanger, or a three-way valve.
